Europäisches Patentamt

European Patent Office

Office européen des brevets

(19)

(11) Numéro de publication: **0 259 200 B1**

(12) **FASCICULE DE BREVET EUROPEEN**

(45) Date de publication de fascicule du brevet:
23.10.91

(21) Numéro de dépôt: **87401752.8**

(22) Date de dépôt: **27.07.87**

(51) Int. Cl.⁵: **C12G 1/00, B65G 65/48**

(54) **Cuve de fermentation ou macération avec extracteur mobile.**

(30) Priorité: **08.08.86 FR 8611610**

(43) Date de publication de la demande:
**09.03.88 Bulletin 88/10**

(45) Mention de la délivrance du brevet:
**23.10.91 Bulletin 91/43**

(84) Etats contractants désignés:
**CH DE ES IT LI**

(56) Documents cités:
**DE-A- 3 209 831**
**FR-A- 2 176 618**
**FR-A- 2 199 552**
**FR-A- 2 421 821**
**FR-A- 2 499 586**

(73) Titulaire: **Fabbri, Frédéric**
**Avenue Victor Hugo**
**F-84320 Entraigues-sur-Sorgues(FR)**

(72) Inventeur: **Fabbri, Frédéric**
**Avenue Victor Hugo**
**F-84320 Entraigues-sur-Sorgues(FR)**

(74) Mandataire: **Bugnon-Hays, Claudine**
**PATCO S.A. 39, Boulevard René Cassin B.P.4**
**F-84170 Monteux(FR)**

Rank Xerox (UK) Business Services

## Description

La présente invention concerne une cuve de fermentation ou macération utilisée dans le domaine agro-alimentaire pour la fermentation ou macération de raisins.

Les cuves se présentent traditionnellement sous forme de fûts métallique ou en matière plastique dressés verticalement. Le vidage de ces cuves nécessite le retrait des matières solides égouttées, séparées des jus liquides.

Pour les évacuer de la cuve, on réalise généralement une ouverture dans la partie inférieure permettant d'introduire un outil pour rassembler les dépôts et les retirer.

On a également proposé dans l'art antérieur d'équiper la partie inférieure de la cuve avec une pale d'un diamètre sensiblement égal à celui de la cuve entrainée en rotation par un moteur électrique fixé sur le fond de la cuve.

Lorsque la cuve est vidée du liquide, on met la pale en rotation à faible vitesse afin de rassember les dépôts solides et à forcer leur évacuation par un orifice pratiqué dans le fond de la cuve.

Le profil des pales est choisi de façon à concentrer les dépôts dans un anneau de balayage passant par l'orifice d'évacuation.

L'étanchéité du passage de l'axe moteur est toutefois difficile à réaliser. De plus, les cuves équipées de la sorte présentent un investissement et un coût d'entretien importants pour un producteur utilisant plusieurs cuves.

La cuve selon la présente invention remédie à ces inconvénients. Elle comporte, en effet, dans sa partie inférieure des moyens permettant d'introduire un extracteur mobile pour les opérations de vidage. Bien sur, le même extracteur peut être utilisé pour plusieurs cuves. Il comporte un bras portant une pale entrainée en rotation par un bloc moteur constitué par un moteur électrique et un réducteur. La transmission s'effectue par une chaine ou un arbre de transmission. Le bras est monté sur un chariot et sa hauteur est variable.

Le bras et la pale sont introduits dans la cuve après vidange du liquide par une ouverture latérale réalisée dans la partie inférieure. Lors de l'introduction, la pale est bloquée en position parallèle au bras. La cuve comporte un fond prolongé vers le bas par un caisson parallélépipédique disposé symétriquement au diamètre du fond.

Ce caisson permet l'introduction du bras en vue de l'extraction des dépôts solides. Il comporte des moyens de guidage coopérant avec la paroi horizontale supérieure du bras réalisant une plaque d'étanchéité pour le fond de la cuve.

Lors de la fermentation ou macération, l'ouverture latérale de la cuve communiquant avec le caisson est fermée par une porte d'extraction étanche.

La fente réalisée dans le fond de la cuve au niveau du caisson est recouverte d'une grille afin d'empêcher les dépôts solides de pénétrer dans le caisson.

Lorsque la fermentation ou macération est achevée, le liquide est extrait par l'intermédiaire d'un orifice pratiqué dans le fond du caisson. La porte d'extraction est alors ouverte pour l'introduction du bras d'extraction et de la pale. La grille est ensuite retirée par la porte en la faisant glisser et la pale est mise en rotation. La pale dont le profil épouse le fond de la cuve, est mise en rotation afin de rassembler les dépôts et à les évacuer par un orifice d'évacuation des dépôts pratiqué dans le fond de la cuve. La plaque d'étanchéité empêche les dépôts de pénétrer dans le caisson. La pale, remise en position parallèle au bras, est ensuite retirée et l'extracteur devient disponible pour le vidage d'une nouvelle cuve.

D'autres avantages et formes de réalisation ressortiront mieux de la description illustrée par les dessins suivants :

la figure 1 représente une vue de face de la cuve avec le bras de l'extracteur en place,

la figure 2 représente une vue en plan du fond de cuve et

les figures 3 et 4 représentent une vue de l'extracteur.

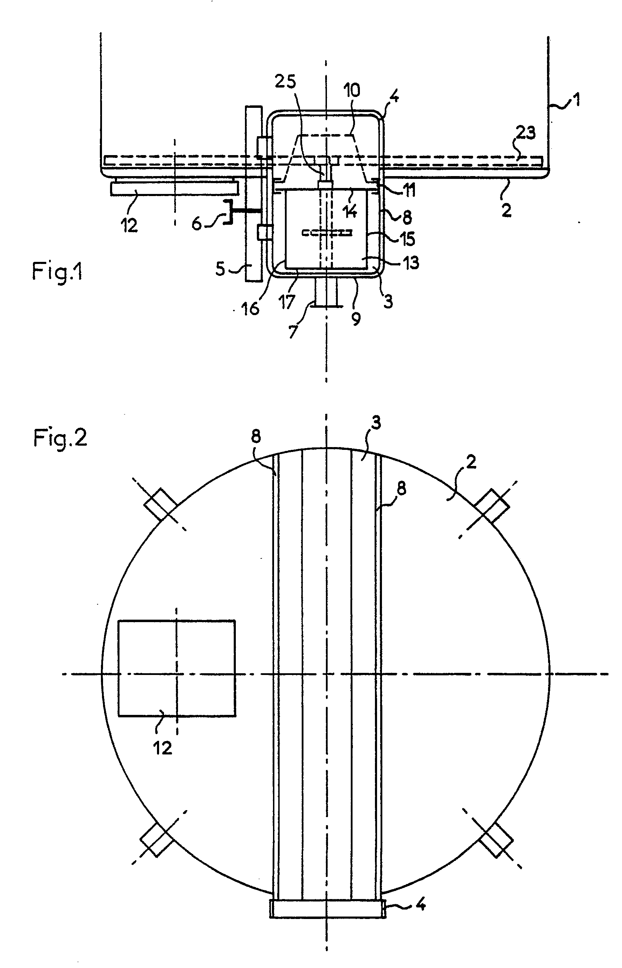

La cuve représentée selon la figure 1 ou la figure 2 comporte un fût vertical (1) de préférence cylindrique avec un fond (2) prolongé par un caisson (3). Dans la paertie inférieure de la cuve, une ouverture latérale (4) communique avec le caisson (3). L'ouverture latérale peut être fermée hermétiquement par une porte (5) comportant des moyens de vérrouillage (6) de type connu. Le caisson (3) comporte un orifice d'évacuation des liquides (7) commandé par un robinet et des glissières de guidage (8), disposés à une hauteur légèrement inférieure au fond (2) de la cuve.

La section du caisson (3) peut être rectangulaire ou semi-circulaire. Ses dimensions doivent être suffisantes pour pouvoir recevoir le bras de l'extracteur et sa partie inférieure doit présenter une concavité suffisante pour permettre l'évacuation des liquides par l'orifice (7).

La partie supérieure du caisson est recouverte pendant la fermentation ou macération par une grille (10) empêchant les dépôts solides de pénétrer dans le caisson. Elle peut-être réalisée en métal inoxydable ou en matière plastique et peut être du type à perforations du 2,5 mm de large par 20 mm environ de longueur ou bien par lattes parallèles juxtaposées dans le sens longitudinal du caisson.

La grille (10) peut-être introduite au-dessus du caisson (3) ou retirée longitudinalement grâce à des glissières (11). Un orifice d'évacuation des dépôts solides (12) est aménagé dans le fond (2) de la cuve et demeure obturé pendant la fermentation ou macération par une porte étanche (5) de type connu.

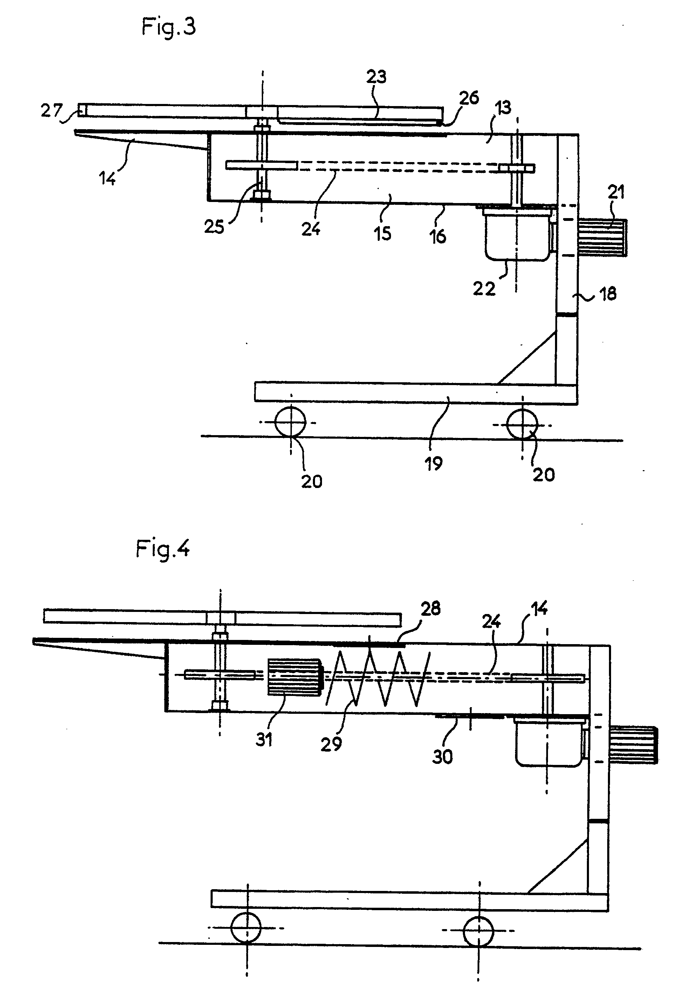

L'extracteur représenté sur la figure 3 comporte un bras (13) constitué d'une plaque d'étanchéité (14) et de parois latérales (15, 16 et 17). Le bras (13) est fixé sur un châssis (18) réglable en hauteur par des moyens connus, par exemple une crémaillère.

L'extracteur représenté sur la figure 4 est une variante du précédent dans lequel l'orifice d'évacuation (12) est supprimé sur le fond (2) de la cuve et est remplacé sur la plaque d'étanchéité (14) et vers le caisson (3) par une ouverture (28); les matières solides tombant dans cette ouverture sont poussées par une vis sans fin (29), elle-même actionnée par un motoréducteur (31) et évacuées par un orifice (30) donnant sur l'extérieur. Dans cette variante, la transmission (24) aura la longueur intérieure du caisson (3) afin de laisser passer la vis sans fin (29).

Le châssis (18) comporte un socle (19) monté sur des roulettes pivotantes (20).

Le châssis (18) supporte également un bloc moteur constitué d'un moteur électrique (21) et d'un réducteur (22) entraînant la pale (23) à une vitesse comprise entre 1 tour/minute et 20 tours/minute par l'intermédiaire d'une transmission (24) constituée par une chaine ou un arbre de transmission. La pale (23) est fixée sur un axe vertical (25).

La plaque d'étanchéité (14) s'adapte avec précision avec les glissières latérales (8) du caisson (3) de façon à empêcher les dépôts solides de pénétrer dans le caisson.

Le profil de la pale peut être droit ou peut présenter une concavité orientée vers le sens de rotation de façon à concentrer les dépôts dans un anneau de balayage passant au-dessus de l'orifice d'évacuation des dépôts solides (12). Le diamètre de la pale est sensiblement égal au diamètre de la cuve (1). Elle est constituée d'éléments métalliques. Ces tranches (26 et 27) peuvent être recouvertes d'un bandeau déformable de type caoutchouc permettant d'épouser les irrégularités présentes à la surface de la cuve et du fond (2).

Selon une variante, l'axe (25) est muni d'un détecteur de position permettant de bloquer la pale (23) dans une position parallèle au bras (13). Ce détecteur peut être électromagnétique ou optoélectronique et il commande l'arrêt du moteur électrique lorsque l'utilisateur souhaite retirer l'extracteur de la cuve.

Selon une autre variante, le socle de l'extracteur supporte un récipient permettant de recueillir les dépôts solides évacués par l'orifice (12).

Bien entendu, l'invention n'est pas limitée aux modes de réalisation décrits et représentés ici mais on peut y apporter de nombreuses modifications sans pour cela sortir du cadre de l'invention.

## Revendications

1. Cuve de fermentation ou macération constituée d'un fût vertical (1) comportant dans sa partie inférieure (2) des orifices d'évacuation des liquides (7) et des dépôts solides (12) caractérisée en ce que l'évacuation des dépôts solides est réalisée à l'aide d'un extracteur mobile comportant un bras (13) supportant une pale tournante (23) et des moyens d'entrainement (24) de ladite pale tournante, ledit extracteur pouvant être introduit dans la partie inférieure de la cuve par une ouverture latérale (4) communiquant partiellement avec un caisson (3).

2. Cuve selon la revendication 1 caractérisée en ce que ledit caisson (3) comporte des glissières de guidage (8) coopérant avec la plaque d'étanchéité (14) de l'extracteur.

3. Cuve selon les revendications 1 ou 2 caractérisée en ce que le caisson (3) est recouvert d'une grille amovible (10).

4. Extracteur pour la mise en oeuvre de la cuve selon l'une quelconque des revendications 1 à 3, caractérisé en ce qu'il comporte un châssis (18) monté sur un socle (19) mobile.

5. Extracteur selon la revendication 4, caractérisé en ce que le socle (19) supporte un récipient de recueil des dépôts solides.

6. Extracteur selon les revendications 4 ou 5 caractérisé en ce que la pale tournante est entrainée par une chaine.

7. Extracteur selon les revendications 4 ou 5 caractérisé en ce que la pale tournante est entrainée par un arbre de transmission.

8. Extracteur selon l'une quelconque des revendications 4 à 7 caractérisé en ce qu'il comporte un détecteur de position du bras (23).

## Claims

1. Fermentation or steeping vat consisting of a vertical drum (1) provided at its lower end (2) with openings for the evacuation of liquids (7) and solids (12), specific in that the extraction of solid deposits is carried out by means of a mobile extractor equipped with an arm (13) supporting a revolving paddle (23) and the drive system (24) for the revolving paddle, and provision for the said extractor to be introduced into the lower part of the vat by way of a side opening (4) partly communicating with a box structure (3).

2.  Vat according to requirement 1 specific in that the said box structure (3) includes sliding tracks (8)
    operating in conjunction with the extractor seal plate (14).

3.  Vat according to requirements 1) or 2) specific in that the box structure (3) is covered by a removable grille (10).

4.  Extractor enabling the vat to be used in accordance with any one of requirements 1) to 3), specific in that it includes a frame (18) mounted on a mobile base (19).

5.  Extractor in accordance with requirement 4), specific in that the base (19) supports a recipient to collect solid deposits.

6.  Extractor in accordance with requirements 4) or 5), specific in that the revolving paddle is chain-driven.

7.  Extractor in accordance with requirements 4 or 5, specific in that the rotating paddle is driven by a transmission-shaft.

8.  Extractor in accordance with any one of requirements 4) to 7), specific in that it includes a position-detector for the arm (23).

**Patentansprüche**

1.  Gärungs- oder Mazerationsbottich, bestehend aus einem vertikalen Faß (1), das in seinem unteren Teil (2) Ablaßöffnungen für die Flüssigkeiten (7) und festen Ablagerungen (12) enthält und dadurch gekennzeichnet ist, daß der Ablaß der festen Ablagerungen mit Hilfe eines mobilen Extraktors erfolgt, der einen Arm (13) enthält, welcher eine Drehschaufel (23) und die Antriebsmittel (24) der besagten Drehschaufel trägt, wobei besagter Ertraktor durch eine seitliche Öffnung (4), die teilweise mit einem Tank verbunden ist, in den unteren Teil des Bottichs eingeführt werden kann.

2.  Bottich gemäß Patentanspruch 1, dadurch gekennzeichnet, daß besagter Tank (3) Führungsschienen (8) enthält, die mit der Dichtungsplatte des Extraktors zusammenarbeiten.

3.  Bottich gemäß den Patentansprüchen 1 oder 2, dadurch gekennzeichnet, daß der Tank (3) mit einem abnehmbaren Rost (10) bedeckt ist.

4.  Extraktor für die Inbetriebnahme des Bottichs gemäß irgendeinem der Patentansprüche 1 bis 3, dadurch gekennzeichnet, daß er einen auf einen beweglichen Sockel (19) montierten Rahmen (18) enthält.

5.  Extraktor gemäß Patentanspruch 4, dadurch gekennzeichnet, daß der Sockel (19) einen Behälter für die Aufnahme der festen Ablagerungen enthält.

6.  Extraktor gemäß den Patentansprüchen 4 oder 5, dadurch gekennzeichnet, daß die Drehschaufel durch eine Kette angetrieben wird.

7.  Extraktor gemäß den Patentansprüchen 4 oder 5, dadurch gekennzeichnet, daß die Drehschaufel durch eine Transmissionswelle angetrieben wird.

8.  Extraktor gemäß irgendeinem der Patentansprüche 4 bis 7, dadurch gekennzeichnet, daß er einen Armstellungsgeber (23) enthält.

Fig.1

Fig.2

Fig.3

Fig.4